# EUROPEAN PATENT APPLICATION

(11) **EP 1 252 968 A1**
(43) Date of publication of application: **30.10.2002**
(21) Application number: 02251827.8
(22) Date of filing: 14.03.2002
(51) Int. Cl.: B23Q 3/18, B25J 9/16, G05B 19/418, B23Q 16/12

(54) **Tooling fixture building process**

(30) Priority: 26.04.2001 US 286872 P
(71) Applicant: Progressive Tool & Industries Company, Southfield, MI 48034 (US)
(72) Inventor: Dugas, Michael R., Brighton, Michigan 48116 (US); Kilibarda, Velibor, Birmingham, Michigan 48009 (US)
(74) Representative: Spoor, Brian

(57) **Abstract**

A method for fabricating a workpiece support structure where a fixture component such as a locating pin, clamp or mounting structure is held in a desired position by a robotic arm. The fixture is then built from the floor of the manufacturing facility to the fixture component. The apparatus can also include a position sensor system and control means for the robotic arm. The position sensor can detect the position of the fixture component relative to a support structure for the fixture and emit a signal to the controller corresponding to the position of the fixture component. The controller can receive the signal and move the robot arm to position the fixture component in a desired position. The surface can be the floor of the manufacturing facility or a moveable surface.

## Description

The invention relates to a method for fabricating a tooling fixture, and, more specifically, provides a process for building a fixture without requiring the use of dimensionally accurate structural components.

The process of fabricating a tooling fixture for retaining a workpiece during a processing operation is currently time consuming and expensive. Once the product to be processed has been designed, a tooling fixture can be designed to retain the workpiece in a desired position and orientation so that a processing operation, such as a welding operation, can be performed on the workpiece. The tooling fixture will typically be assembled from multiple structural members produced to maintain dimensional accuracy and reduce build up of tolerance. Some structural members may be specially designed for the particular tooling fixture. Alternatively or additionally, the tooling fixture can be assembled with off-the-shelf dimensionally accurate components. However, off-the-shelf dimensionally accurate components are expensive because of the tight manufacturing tolerances required of a tooling fixture to minimize tolerance build up of the assembled components. Once the parts have been manufactured, the tooling fixture can be assembled. As each component of the tooling fixture is assembled, the dimensions of the assembly must be gauged to insure that the overall assembly is within acceptable tolerances. The process of building the tooling fixture requires multiple components, each component manufactured to tight tolerances, and an overall assembly having to conform to a tight tolerance. Every conventional tooling fixture is built on a dimensionally accurate base plate to locate the tooling fixtures with respect to one another.

The present invention provides a method for fabricating a workpiece support structure or tooling fixture at a reduced cost and in reduced time relative to the methods of fabricating a workpiece support structure or tooling fixture currently used in the art. The system does not require dimensionally accurate bases or components. The system includes a base surface, at least one fixture component and means for positioning each fixture component relative to the base surface. The base surface provides a support for positioning the fixture components with respect to one another. By way of example and not limitation, fixture components can include clamps, locators, supports and the like. The base surface of the present invention is not required to be a dimensionally accurate surface. The base surface corresponds to a position where the assembled workpiece support structure or tooling fixture will be located. The surface can be the actual surface where the support will be positioned or can be a moveable surface for set-up at the actual location. The fixture components can be any type of workpiece support component such as a clamp, pin, guide or mounting arm. The present invention can be used for fabricating a workpiece support structure having multiple interchangeable tooling fixtures with one or more components per fixture. The means for positioning the fixture components relative to one another can maintain each component in a desired position relative to one another so that an appropriate component support structure can be assembled from the base surface to each component of the tooling fixture. The means for positioning can be a robot arm, and/or CNC system, and/or CMM system, and/or a vision guidance system. The system can include a sensor system for verifying the position of each component relative to the other components.

Other applications of the present invention will become apparent to those skilled in the art when the following description of the best mode contemplated for practicing the invention is read in conjunction with the accompanying drawings.

The description makes reference to the accompanying drawings by way of example wherein like reference numerals refer to like parts throughout the several views, and wherein:
Figure 1 is a schematic drawing of a system for fabricating a tooling fixture according to the present invention;
Figure 2 is an isometric view of an exemplary component support structure according to the present invention for use in the tooling fixture;
Figure 3 is a flow chart illustrating the steps for building a tooling fixture according to the prior art; and
Figure 4 is a flow chart of the steps for building a tooling fixture according to the present invention.

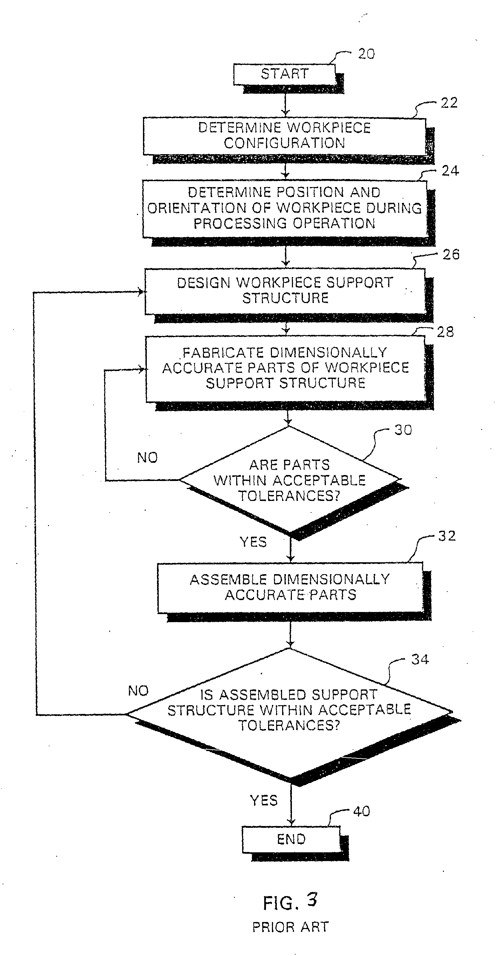

The process steps followed in fabricating a tooling fixture according to the prior art are shown in the simplified flow diagram of Figure 3. The process starts at step 20. Step 22 determines the configuration of a workpiece to be processed at the to-be-built tooling fixture. The configuration of the workpiece is determined by considering the shape of the workpiece, the material of the workpiece and the processing operations to be performed on the workpiece at the workstation to receive the tooling fixture. The workpiece can be an automotive body component. Step 24 determines the desired position and orientation of the workpiece during a processing operation. This can be determined by considering several factors. Some of the factors that can be considered include the layout of the factory floor where the processing operation will occur, the configuration and capabilities of the processing robots to be used in the processing operations, and the configuration of the workpiece. The desired position and orientation of the workpiece can be expressed or defined in reference to a theoretical reference plane. Step 26 designs the tooling fixture configuration to hold the workpiece securely while allowing clearance for processing operations. The design of the tooling fixture corresponds to the desired position and orientation of the workpiece determined by step 24. The tooling fixture can be fabricated from one or more components, such as clamps, locating pins and mounting brackets. The position and orientation of the tooling fixture can be expressed or defined with reference to the position and orientation of the workpiece, which, in turn, is expressed or defined in reference to the reference plane. The design of the component support structure can include an assembly of multiple dimensionally accurate parts. Step 28 fabricates the dimensionally accurate parts of the component support structure. Typically, these parts are relatively costly and require extended lead times for fabrication due to the relatively tight manufacturing tolerances required of a component support structure. Step 30 monitors whether the fabricated parts of the component support structure are within acceptable tolerances. If the parts are not within acceptable tolerances, the process will return to step 28 and replacement parts are fabricated. If the parts are within acceptable tolerances, the process continues to step 32 and the parts are assembled. Step 34 monitors whether the assembled parts are within acceptable tolerances to support the component of the tooling fixture in the desired location. If the assembled parts are not within acceptable tolerances the method returns to step 26 for redesign of the parts. If step 34 determines that the assembled parts are within acceptable tolerances, the process ends at step 40.

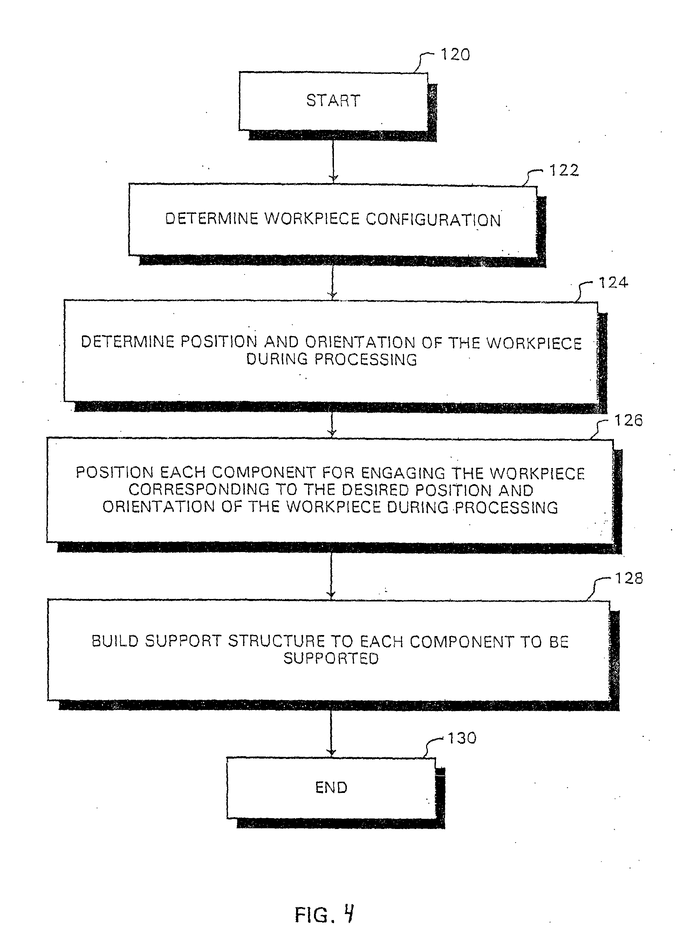

The process steps according to the present invention for building a tooling fixture are shown in the simplified flow diagram of Figure 4. The process starts at step 120. Step 122 determines the configuration of the workpiece to be processed. Typically this information is provided by the customer to the tooling fixture builder. Step 124 determines the position and orientation of the workpiece during the processing operation. Step 126 positions a component of the tooling fixture being built in a position relative to the positioning means. The present invention does not require a reference plane corresponding to the surface for supporting the components defining the tooling fixture, since the relative position of the component fixtures to one another is the critical orientation, not the accuracy of the base surface or parts built up to support each component. The support can engage the component when the component is positioned relative to the positioning means. The components can include by way of example and not limitation, a clamp, a locating pin, or a mounting bracket. Step 128 assembles a support from the base surface to the component without requiring dimensionally accurate parts. The process according to the present invention does not require a dimensionally accurate base, or dimensionally accurate parts for supporting each component from the base. The process of the present invention does not require the inspection of the individual dimensionally accurate parts, or inspection of the assembled dimensionally accurate parts. The process according to the present invention stops at step 130.

As shown in Figure 3, a system for fabricating a tooling fixture according to the present invention is illustrated. The system 46 includes a surface 48, at least one component 50 and positioning means 52. The surface 48 is not required to be dimensionally accurate or even to be a relatively flat surface. The surface 48 can even be an uneven plant floor provided it is dimensionally stable. The surface 48 can be located at the manufacturing facility where the processing operation will take place. The surface 48 can be moveable between an assembly or building location and a location where the tooling fixture will be used. In other words, the surface 48 can be located off-site, such as a tooling fixture manufacturing facility. The surface 48 is not required to provide a geometric plane of reference for fabricating the tooling fixture. This dimensional reference is provided by the positioning means 52. In Figure 3, the surface 48 is shown as square, however, the surface 48 can be circular, rectangular, triangular, polygonal or discontinuous. The system 46 also includes at least one component 50 such as a clamp locating member, workpiece support or the like. In Figure 3, the component 50 is shown as a locating pin for illustrative purposes. However, the component 50 can also be a clamp, mounting arm, support surface, or the like. The component 50 can engage a workpiece while the workpiece is subjected to a processing operation, such as a welding operation. Multiple components 50 typically are used in building a single tooling fixture according to the system 46 of the present invention.

The system 46 also includes positioning means 52 for positioning each component 50 in a precise position relative to the positioning means and to one another. Positioning means 52 can be a robotic arm 54 with means 56 for engaging a component 50. If multiple components 50 are to be used, the engaging means 56 positions each component individually in a precise location to ensure an accurate tooling fixture is built. Each fixture component 50 is individually held by the positioning means 52 until the support is built to hold the component in the precise location. This process eliminates the need for dimensionally accurate support parts. For example, a first component 50 can be positioned by positioning means 52 and the component support can be built from the surface 48 to the first component 50. A second component 50 can be positioned by the positioning means 52 and the support can be built to the second component 50. This process can be followed until all supports have been built to support all of the desired components 50. The robotic arm 54 can be controlled to ensure that each component 50 is in a precise position relative to the other components 50.

The positioning means 52 can include a position sensor system 58 for accurately positioning the components without using a robotic arm or to verify that the components 50 have been supported in the precise position before fabrication of a support is commenced or is completed. The position sensor system 58 can be any type of position sensor system known in the art. For example, the position sensor system 58 can include a video camera, an infrared sensor, an ultraviolet sensor, an x-ray sensor, a radar sensor, an ultrasonic sensor, a sonar sensor, a magnetic sensor, a computer numeric control system (CNC), or a (CMM), or a vision guidance system. In a preferred embodiment of the invention, the sensor system 58 is an optical sensor system.

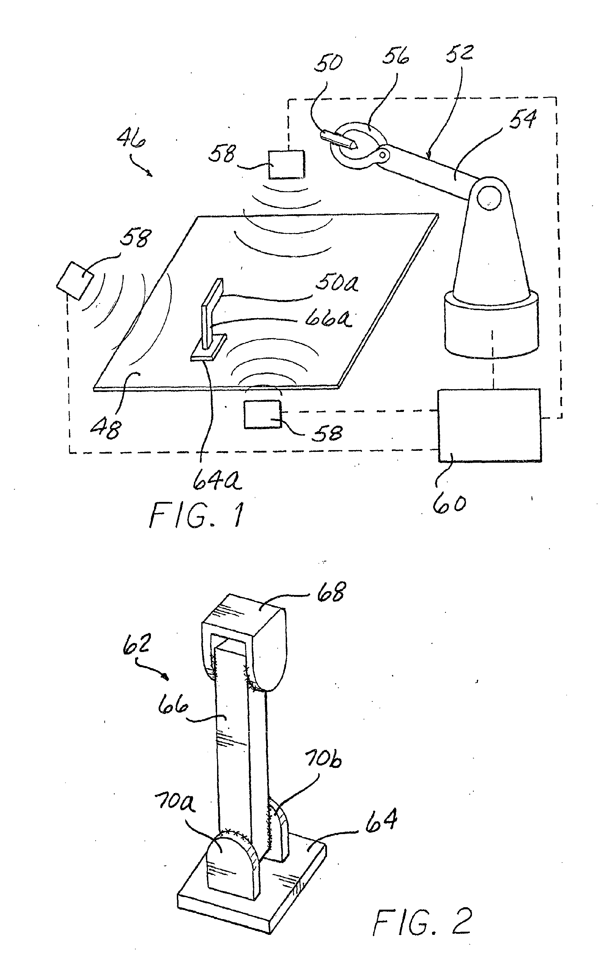

The system 46 can also include control means 60 for controlling the robotic arm 54. Control means 60 can receive a signal from the sensor system 58 corresponding to the position of the component 50. If the component 50 is not in the desired position, control means 60 can control the robotic arm 54 to move the component 50 into the desired position. Alternatively, the signal can generate a message to the personnel handling the component by hand to adjust the position while building the support for each component of the tooling fixture. The sensor 58 and control means 60 can be integral with other parts of the positioning means 52 or can be separate, as shown in Figure 1.

In Figure 2, one possible exemplary support 62 is shown by way of illustration and not limitation. The support 62 includes a base 64, a riser 66 and a mounting block 68. The riser 66 is moveably engaged with the base 64. The mounting block 68 is moveably engaged with the riser 66. The support 62 can be positioned on the surface 48. The riser 66 and mounting block 68 are positioned adjacent a component to be supported from the base 64. When the riser 66 and mounting block 68 have been precisely positioned, the mounting block 68, riser 66, and base 64 are connected relative to each other by welding the components together, or by any other suitable fastening process. The base is mounted, or welded, to the surface 48. It should be recognized that the specific form or configuration of the support 62 can be varied in the present invention without departing from the scope of the present application. The support 62 can be built with any suitable structural components that maintain dimensional stability and strength over the expected environmental ranges to be encountered for the particular application. Figure 1 shows a partially constructed support having a base 64a, a riser 66a and a beam 50a operably associated with the riser 66a.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. An apparatus for building a fixture assembled from a plurality of structural members comprising:
positioning means for positioning at least one component for engaging a workpiece during a processing operation at a first position corresponding to a desired position of the workpiece during processing prior to assembly of the structural members of the fixture.

2. The apparatus of claim 1 wherein the positioning means further comprises:
a robotic arm including means for engaging the at least one component.

3. The apparatus of claim 1 wherein the positioning means further comprises:
a position sensor system for verifying that the at least one component has been positioned in the first position.

4. The apparatus of claim 3 wherein the position sensor system is selected from the group consisting of at least one video camera, at least one infrared sensor, at least one ultraviolet sensor, at least one x-ray sensor, at least one radar sensor, at least one ultrasonic sensor, at least one sonar sensor, at least one magnetic sensor, a computer numeric control system, and a vision guidance system.

5. The apparatus of claim 1 wherein the positioning means further comprises:
a robotic arm including means for engaging the at least one component;
a position sensor system operable to emit a signal corresponding to the position of the at least one component; and
control means receiving the signal from the position sensor system and controlling the robotic arm in response to the signal to move the at least one component to the first position.

6. The apparatus of claim 1 wherein the at least one component is selected from the group consisting of a clamp, a mounting arm, a locating pin and a support surface.

7. A method for building a fixture assembled from a plurality of structural members comprising the step of:
positioning at least one component for engaging a workpiece during a processing operation at a first position corresponding to a desired position of the workpiece during processing prior to assembly of the structural members of the fixture with positioning means.

8. The method of claim 7 further comprising the steps of:
building a portion of the fixture to support the at least one component; and
positioning a second component spaced apart from the at least one component at a second position corresponding to the desired position with positioning means.

9. The method of claim 8 further comprising the step of:
building a second portion of the fixture to support the second component.

10. The method of claim 7 further comprising the step of:
building the fixture with a plurality of structural members to support the at least one component while the at least one component is maintained at the first position by positioning means.

11. The method of claim 7 wherein the positioning step further comprises the step of:
positioning the at least one component with a robotic arm.

12. The method of claim 7 wherein the positioning step further comprises the step of:
verifying a position of the at least one component with a position sensor system.

13. The method of claim 12 further comprising the step of:
emitting a message to a human operator to move the at least one component if the at least one component is not in the first position.

14. The method of claim 7 wherein the positioning step further comprises the steps of:
positioning the at least one component with a robotic arm;
verifying a position of the at least one component with a position sensor system;
emitting a signal corresponding to the position of the at least one component with emitting means;
receiving the signal with control means; and
controlling the robotic arm with control means in response to the signal.

15. The method of claim 7 wherein the positioning step further comprises the step of:
positioning the at least one component relative to a surface for supporting the fixture.

16. The method of claim 15 further comprising the step of:
moving the surface to a manufacturing facility.

17. A method for building a fixture assembled from a plurality of structural members comprising the steps of:
grasping at least one component for engaging a workpiece during a processing operation with a robotic arm;
sensing a position of the at least one component and emitting a signal corresponding to the position of the at least one component with an optical position sensor system; and
receiving the signal and controlling the robotic arm to move the at least one component to a first position corresponding to a desired position of the workpiece during processing prior to assembly of the structural members of the fixture.

18. The method of claim 17 further comprising the step of:
positioning the at least one component relative to a surface; and
assembling a fixture from a plurality of structural members from the surface to the at least one component.

19. The method of claim 17 further comprising the step of:
positioning a second component at a second position spaced from the first position;
assembling at least one structural member to the fixture and engaging the at least one structural member with the second component.

20. The method of claim 18 further comprising the step of:
moving the surface to a manufacturing facility.
